# DEMANDE DE BREVET EUROPEEN

(11) **EP 3 799 350 A1**
(43) Date de publication de la demande: **31.03.2021**
(21) Numéro de dépôt: 20198154.5
(22) Date de dépôt: 24.09.2020
(51) Int. Cl.: H04L 9/08

(54) **PROCÉDÉ DE CRYPTAGE**

(30) Priorité: 30.09.2019 FR 1910785
(71) Demandeur: STMICROELECTRONICS SA, 92120 Montrouge (FR)
(72) Inventeur: BARATTE, Benjamin, 92120 Montrouge (FR); HALAJKO, Laurent, 91120 Palaiseau (FR)
(74) Mandataire: Cabinet Beaumont

(57) **Abrégé**

La présente description concerne un procédé de cryptage mis en oeuvre par un circuit électronique (115, 130) comportant une première mémoire non volatile (135), comprenant : la création d'une ou plusieurs premières paires de clés asymétriques, la première paire ou chacune des premières paires comprenant des premières clés privée et publique ; et, pour la ou au moins une des premières paires : la mémorisation de la première clé publique dans la première mémoire ; la réception d'une deuxième clé publique au cours d'une session de communication ; et la formation d'une première clé symétrique à partir de la première clé privée et de la deuxième clé publique, la première clé publique restant mémorisée dans la première mémoire après ladite session de communication.

## Description

### Domaine technique

La présente description concerne de façon générale les dispositifs électroniques et les communications entre dispositifs électroniques, et plus particulièrement la transmission, le traitement et/ou le stockage de données cryptées.

### Technique antérieure

Certaines applications concernent la transmission, le traitement et/ou le stockage de données confidentielles. Les données confidentielles sont transmises et stockées sous forme cryptée afin d'éviter qu'une personne non autorisée par le propriétaire de ces données puisse accéder à ces données et/ou puisse les modifier.

### Résumé de l'invention

Un mode de réalisation pallie tout ou partie des inconvénients des procédés connus de communication et/ou traitement et/ou stockage de données confidentielles.

Un mode de réalisation pallie tout ou partie des inconvénients des systèmes connus de communication et/ou traitement et/ou stockage de données confidentielle. En particulier, un mode de réalisation pallie tout ou partie des inconvénients de circuits électroniques connus utilisés dans un tel système de communication pour communiquer et/ou traiter et/ou stocker les données confidentielles.

Un mode de réalisation prévoit un procédé de cryptage mis en oeuvre par un circuit électronique comportant une première mémoire non volatile, comprenant :
la création d'une ou plusieurs premières paires de clés asymétriques, la première paire ou chacune des premières paires comprenant des premières clés privée et publique ; et
pour la ou au moins une des premières paires :
   - la mémorisation de la première clé publique dans la première mémoire ;
   - la réception d'une deuxième clé publique au cours d'une session de communication ; et
   - la formation d'une première clé symétrique à partir de la première clé privée et de la deuxième clé publique,
   la première clé publique restant mémorisée dans la première mémoire après ladite session de communication.

Selon un mode de réalisation, la session de communication est entre le circuit électronique et un domaine de sécurité, la deuxième clé publique étant envoyée au circuit électronique par le domaine de sécurité pendant la session de communication.

Selon un mode de réalisation, la première clé publique (AS2i P) reste stockée dans la première mémoire (135) après une attaque visant à se procurer des données confidentielles stockées dans le circuit et/ou après une coupure de l'alimentation du circuit électronique.

Selon un mode de réalisation, le procédé comprend, pour la ou au moins une des premières paires, l'effacement de la première clé privée, de préférence au cours de ladite session de communication.

Selon un mode de réalisation, pour la ou au moins une des premières paires, au moins une deuxième clé symétrique est formée à partir de la première clé privée et de la deuxième clé publique.

Selon un mode de réalisation, le procédé comprend, pour la ou au moins une des premières paires, la formation des première et deuxième clés symétriques à partir d'une graine formée à partir de la première clé privée et de la deuxième clé publique.

Selon un mode de réalisation, le procédé comprend, pour une seule des premières paires, la mémorisation dans la première mémoire de la graine et de la première clé symétrique, de préférence cryptées par une clé interne audit circuit électronique.

Selon un mode de réalisation, le procédé comprend la mémorisation de la ou des premières clés symétriques dans une autre mémoire, volatile et/ou configurée pour être effacée en cas de détection d'attaque.

Selon un mode de réalisation, le procédé comprend, pour la ou au moins une des premières paires, le stockage de données cryptées par la première clé symétrique, lesdites données étant stockées dans une deuxième mémoire non volatile.

Selon un mode de réalisation, des communications internes audit circuit électronique sont cryptées par une clé symétrique supplémentaire.

Selon un mode de réalisation, la clé symétrique supplémentaire est stockée dans la première mémoire sous forme cryptée par la première clé de la ou de l'une des premières paires.

Selon un mode de réalisation, le procédé comprend la ou les premières clés publiques sont mémorisées sous forme signée par ledit circuit électronique.

Selon un mode de réalisation, pour la ou au moins une des premières paires, la deuxième clé publique provient d'une deuxième paire de clés asymétriques comprenant une deuxième clé privée, les première et deuxième paires de clés asymétriques étant de sorte que la première clé symétrique soit déductible de la deuxième clé privée et la première clé publique, les première et deuxième paires étant de préférence obtenues par un algorithme de Diffie-Hellman.

Selon un mode de réalisation, la première mémoire est lisible uniquement par un détenteur de ladite clé symétrique supplémentaire et/ou un administrateur, de préférence détenteur d'une troisième clé privée.

Un mode de réalisation prévoit un circuit électronique configuré pour mettre un oeuvre un procédé tel que défini ci-dessus.

Selon un mode de réalisation, le procédé comprend en outre, pour au moins une des premières paires :
la lecture, par l'administrateur, de la première clé publique de ladite première paire ;
la transmission de la première clé publique de ladite première paire à un détenteur de la deuxième clé privée ; et
la déduction de la première clé symétrique à partir de la première clé publique et d'une deuxième clé privée d'une deuxième paire de clés asymétriques comprenant la deuxième clé publique.

Selon un mode de réalisation :
la première mémoire est lisible uniquement par un détenteur d'une clé symétrique supplémentaire et/ou un administrateur, de préférence détenteur d'une troisième clé privée ; et/ou
des communications internes audit circuit électronique sont cryptées par une clé symétrique supplémentaire ; et/ou
   une clé symétrique supplémentaire est stockée dans la première mémoire sous forme cryptée par la première clé de la ou de l'une des premières paires.

Un mode de réalisation prévoit un système comprenant un circuit tel que défini ci-dessus, ledit système étant de préférence configuré pour mettre en oeuvre un procédé tel que défini ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, sous forme de blocs et de manière schématique, un mode de réalisation d'un système de communication, traitement et/ou stockage de données confidentielles.
la figure 2 représente, de manière schématique, des informations mémorisées par des éléments du système de la figure 1, lors de la mise en oeuvre d'étapes d'un mode de réalisation d'un procédé de communication, traitement et/ou stockage de données confidentielles.
la figure 3 représente, de manière schématique, des blocs illustrant d'autres étapes du procédé, et des informations mémorisées dans des mémoires au cours de ces étapes ;
la figure 4 représente, de manière schématique, des blocs illustrant des étapes d'un exemple de mise en oeuvre d'une étape du procédé, et des informations mémorisées dans des mémoires au cours de cette étape ;
la figure 5 représente, sous forme de blocs et de manière schématique, d'autres étapes d'un exemple du procédé ;
la figure 6 représente, sous forme de blocs et de manière schématique, des étapes d'un exemple de mise en oeuvre de l'une des étapes de la figure 5 ;
la figure 7 représente, de manière schématique, des blocs illustrant d'autres étapes d'un exemple du procédé, et des informations mémorisées dans des mémoires au cours de ces étapes ; et
la figure 8 représente, de manière schématique, des blocs illustrant d'autres étapes d'un exemple du procédé, et des informations mémorisées dans des mémoires au cours de ces étapes.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, des étapes de génération de clés et d'établissement de sessions de communication cryptée ne sont pas décrites en détail, les modes de réalisation décrits étant compatibles avec les étapes usuelles de génération de clés et d'établissement de communication cryptée. En outre, pour des circuits électroniques, seules les fonctions réalisées sont détaillées, la réalisation de ces circuits électroniques étant à la portée de l'homme du métier à partir des fonctions détaillées.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Sauf précision contraire, les adjectifs numéraux ordinaux, tels que "premier", "deuxième", etc., sont utilisés seulement pour distinguer des éléments entre eux. En particulier, ces adjectifs ne limitent pas les dispositifs et/ou procédés décrits à un ordre particulier de ces éléments.

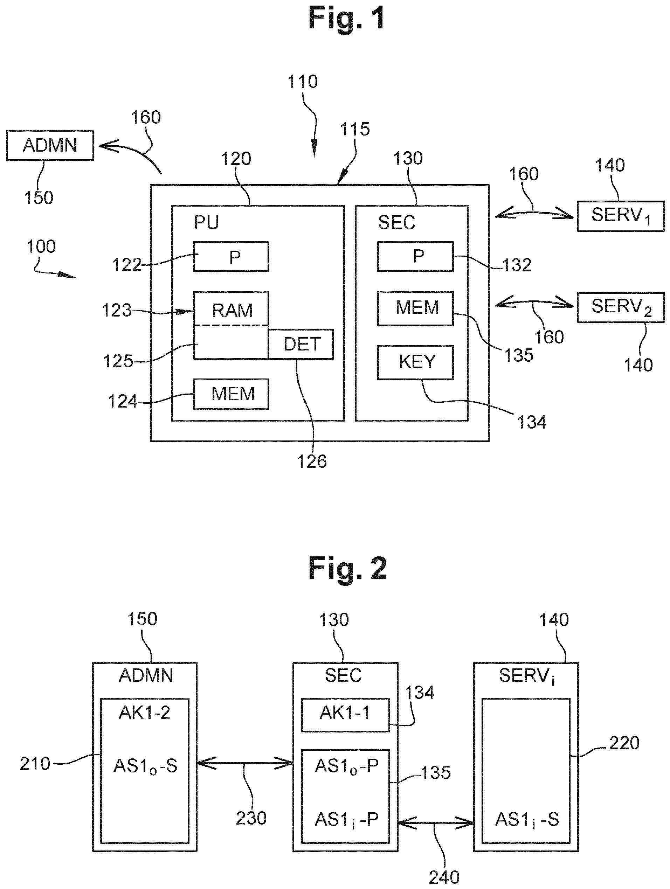

La figure 1 représente, sous forme de blocs et de manière schématique, un mode de réalisation d'un système 100 de communication, traitement et/ou stockage de données confidentielles.

Le système 100 comprend un dispositif 110 d'acquisition et/ou traitement et/ou stockage et/ou communication de données confidentielles. De préférence, le dispositif 110 constitue au moins une partie d'un objet, non représenté, connecté à l'Internet des Objets IOT ("Internet Of Things"). Plus précisément, le dispositif 110 comprend, de préférence est constitué par, un ensemble d'éléments reliés les uns aux autres mécaniquement, et/ou électriquement par des conducteurs. Ces éléments comprennent un circuit électronique 115. Par circuit électronique, on entend un ensemble de composants électroniques reliés entre eux de préférence électriquement, par exemple connectés entre eux. De préférence, les composants sont fixés sur, et reliés électriquement à, de préférence connectés à, un circuit imprimé PCB ("Printed Circuit Board"). Le circuit imprimé peut être commun à plusieurs circuits électroniques. Le dispositif 110 peut comprendre en outre des capteurs, de préférence adaptés à acquérir des données confidentielles, par exemple des capteurs de paramètres médicaux d'un patient.

Le système 100 comprend un ou plusieurs domaines de sécurité 140, chacun propriétaire de données confidentielles. Les domaines de sécurité peuvent être définis chacun par un serveur configuré pour stocker et/ou traiter et/ou communiquer ses données confidentielles avec le dispositif. Deux domaines de sécurité (SERV₁, SERV₂) sont représentés à titre d'exemple, mais le système peut comprendre n'importe quel nombre de domaines de sécurité. Le système comprend en outre, préférentiellement, un administrateur 150 (ADMN). Les domaines de sécurité 140, l'administrateur 150 et le dispositif 110 sont reliés ensemble par un ou des réseaux 160 de communication locale ou à distance tels que le réseau internet. Le ou les réseaux 160 peuvent relier un ou plusieurs des domaines de sécurité 140 et/ou l'administrateur à d'autres dispositifs identiques ou similaires au dispositif 110.

Dans un exemple, un domaine de sécurité est défini par un serveur configuré pour stocker et/ou traiter et/ou communiquer des données de plusieurs utilisateurs. Un tel serveur peut être un serveur de données médicales, chaque utilisateur correspondant alors à un patient. Dans un autre exemple, compatible avec l'exemple précédent, le serveur est un serveur d'informatique en nuage ("cloud computing"), configuré pour stocker les données confidentielles de chaque utilisateur dans le nuage ("cloud"). Le dispositif 110 peut collecter des données confidentielles des utilisateurs, par exemple des données médicales, et transmettre ces données au serveur.

Le ou les réseaux 160 peuvent être au moins en partie de type réseau sans fil, par exemple de type réseau étendu à longue portée LoRaWAN ("Long Range Wide Area Network") ou de type répondant à la norme connue sous le nom de Bluetooth, préférentiellement dans sa version v4.0 ou postérieure c'est-à-dire Bluetooth basse consommation BLE ("Bluetooth Low Energy"), ou encore de type connu sous le nom commercial de WiFi ou de SigFox, etc. Les communications entre les domaines de sécurité, l'administrateur et le dispositif 110 peuvent aussi être, au moins en partie, de type filaire (par exemple par une connexion selon la norme Ethernet ou CAN, ou encore une connexion série). Ces communications peuvent aussi être effectuées directement, par exemple par une prise de type bus universel en série USB (Universal Serial Bus).

Les domaines de sécurité 140 utilisent le même dispositif 110 pour stocker, traiter et/ou transmettre leurs données confidentielles. Les données confidentielles de chacun des domaines de sécurité sont à protéger de tout accès par un autre des domaines de sécurité sans autorisation. Les données confidentielles sont en outre à protéger contre toute attaque visant à se procurer ces données sans le consentement du domaine de sécurité.

De préférence, l'administrateur 150 est aussi l'un des domaines de sécurité du dispositif 110, c'est-à-dire que l'administrateur 150 a accès à ses propres données confidentielles dans le dispositif 110. Les données confidentielles de l'administrateur comprennent de préférence des données de fonctionnement internes au dispositif 110. En particulier, les données de fonctionnement du dispositif sont à protéger contre toute attaque, et à protéger de tout accès par un autre des domaines de sécurité sans autorisation. De même, les données confidentielles des autres domaines de sécurité sont à protéger de tout accès par l'administrateur sans autorisation.

Le circuit électronique 115 du dispositif 110 comprend une unité 120 de traitement et de stockage de données (PU), comprenant un circuit 122 de traitement de données tel qu'un microprocesseur (P), et des mémoires 123 et 124. L'unité 120 constitue de préférence un circuit électronique.

La mémoire 123 (RAM) est de préférence une mémoire vive, ou volatile, c'est-à-dire dont le contenu est effacé en l'absence d'alimentation électrique. Une telle absence d'alimentation peut se produire, par exemple, au cours d'un remplacement de batteries du dispositif 110.

De préférence, au moins une partie 125 de la mémoire vive 123 est reliée à un circuit de détection d'attaque 126 (DET). Plus précisément, le circuit de détection 126 permet de détecter une tentative d'attaque par une personne non autorisée visant à se procurer des informations stockées dans au moins une partie de l'unité 120 de traitement et de stockage, par exemple dans la partie 125. En cas de détection d'une tentative d'attaque, la partie 125 de la mémoire est effacée afin que la personne non autorisée ne soit pas en mesure de se procurer le contenu de cette partie 125. Ceci permet de faire échouer la tentative d'attaque.

La mémoire 124 est une mémoire non volatile et réinscriptible, c'est-à-dire une mémoire de type connu sous le nom de "Flash". Des informations écrites dans une telle mémoire de type Flash peuvent être effacées et/ou remplacées. Les informations stockées dans une mémoire de type Flash restent stockées en l'absence d'alimentation électrique.

Le circuit électronique 115 du dispositif 110 comprend une unité de sécurité 130 (SEC). L'unité de sécurité 130 constitue un circuit électronique. L'unité de sécurité 130 est typiquement comprise dans un boîtier de circuit intégré, c'est-à-dire un bloc comprenant des broches ou des zones métalliques de connexion destinées à être soudées ou brasées à un dispositif extérieur tel qu'un circuit imprimé de type PCB. L'ensemble du boîtier peut faire l'objet d'une certification, de préférence selon les critères communs CC ("Common Criteria") de niveau d'assurance d'évaluation EAL ("Evaluation Assurance Level") 5+.

L'unité de sécurité 130 comprend typiquement un circuit de traitement de données 132 (P), tel qu'un microprocesseur. Le circuit de traitement de données 132 est typiquement spécialisé dans des opérations utilisées usuellement en cryptographie, comme la génération de clés, le cryptage de données, et/ou l'exponentiation modulaire.

L'unité de sécurité 130 comprend un espace de clés 134 (KEY). L'espace de clés 134 comprend des emplacements où des clés peuvent être écrites. Les clés sont stockées dans l'espace 134 sous forme cryptée et ne sont pas accessibles en lecture, en particulier, leur forme décryptée n'est pas accessible. L'unité de sécurité est configurée pour effectuer des opérations de cryptage/décryptage à partir des clés stockées sans donner l'accès aux clés stockées. L'unité de sécurité est également, par exemple, configurée pour effectuer des opérations de génération et/ou de vérification de signature.

L'unité de sécurité 130 comprend une mémoire 135. La mémoire 135 est préférentiellement de type Flash. De préférence, le contenu de la mémoire 135 de l'unité de sécurité 130 est accessible uniquement par l'administrateur 150 et/ou par l'unité de traitement 120.

La figure 2 représente, de manière schématique, des informations mémorisées par des éléments du système de la figure 1, lors de la mise en oeuvre d'étapes d'un mode de réalisation d'un procédé d'acquisition et/ou traitement et/ou stockage et/ou communication de données confidentielles. Plus précisément, on a représenté le contenu d'une mémoire 210 de l'administrateur 150 (ADMN), de la mémoire 135 et de l'espace de clés 134 de l'unité de sécurité 130 (SEC), et d'une mémoire 220 d'un des domaines de sécurité 140 (SERVᵢ, i étant un indice associé au domaine de sécurité considéré).

De préférence, l'administrateur 150 génère une paire de clés de cryptage AK1, comprenant une clé AK1-1 et une clé AK1-2. La paire de clés AK1 peut être une paire de clés symétriques, c'est-à-dire que les clés AK1-1 et AK-2 sont une même clé de cryptage symétrique dite aussi clé symétrique. La paire de clés AK1 peut être une paire de clé de cryptage asymétrique, dite aussi paire de clés asymétriques, les clés AK1-1 et AK1-2 étant respectivement publique et privée. Les modes de réalisation sont compatibles avec toute étape usuelle de génération de clés symétriques ou asymétriques. L'administrateur garde la clé AK1-2. La clé AK1-1 est stockée dans l'unité de sécurité 130. De préférence, l'étape de génération et de stockage de la paire de clés asymétriques AK1 est mise en oeuvre avant les autres étapes décrites, et en particulier avant les étapes comprenant un stockage d'informations dans la mémoire 135. Dans les étapes ultérieures du procédé, la clé AK1-2 permet d'accéder au contenu de la mémoire 135. De préférence, le contenu de la mémoire est stocké sous forme cryptée, et la clé AK1-2 permet d'obtenir le contenu non crypté à partir de la forme cryptée.

Chaque domaine de sécurité 140 génère une paire de clés asymétriques AS1ᵢ. Les étapes de génération des paires de clés asymétriques AS1ᵢ sont mises en oeuvre avant ou après l'étape de génération de la paire de clés AK1. La paire AS1ᵢ comprend une clé publique AS1ᵢ-P et une clé privée AS1ᵢ-S. Chaque domaine de sécurité 140 garde sa clé privée AS1ᵢ-S.

Pour chaque domaine de sécurité 140, au cours d'une session de communication 240, préférentiellement avant que le domaine de sécurité 140 et le dispositif 110 communiquent ensemble de manière sécurisée, le domaine de sécurité 140 transmet sa clé publique AS1ᵢ-P à l'unité de sécurité 130. La clé publique AS1ᵢ-P est stockée dans la mémoire 135. Du fait que seules des informations publiques sont échangées, la session de communication 240 peut être effectuée par tout moyen tel que le réseau 160 décrit ci-dessus en relation avec la figure 1. La session de communication est préférentiellement une session de confiance, c'est-à-dire une session dans laquelle les interlocuteurs ont été authentifiés par une autorité de confiance pour échanger des informations publiques.

En particulier, dans le cas préféré où l'administrateur 150 est aussi un domaine de sécurité, l'administrateur (ici repéré par l'indice i=0) génère également une paire de clés AS1₀, comprenant des clés publique AS1₀-P et privée AS1₀-S. La clé publique AS1₀-P est transmise à l'unité de sécurité 130 au cours d'une session de communication 230 du type de la session de communication 240. La clé publique AS1₀-P est stockée dans la mémoire 135. La clé privée AS1₀-S reste stockée dans la mémoire 210 de l'administrateur.

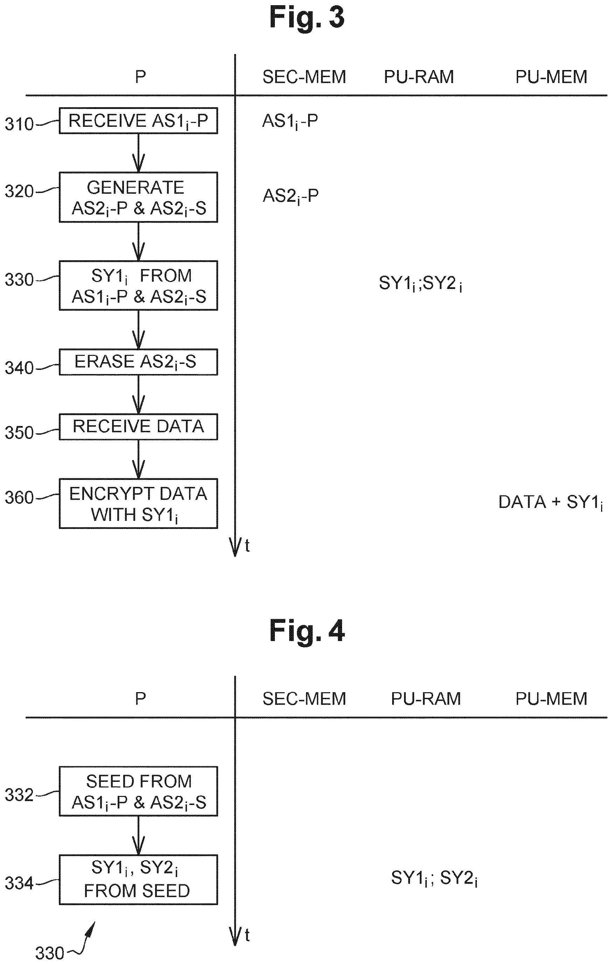

La figure 3 représente, de manière schématique, des blocs illustrant des étapes du procédé, et des informations mémorisées dans des mémoires au cours de ces étapes. Plus précisément, on a représenté des informations dans la mémoire 135 (SEC-MEM) de l'unité de sécurité 130 et dans les mémoires 123 (PU-RAM) et 124 (PU-MEM) de l'unité de traitement et de stockage 120. Les étapes se déroulent selon un axe de temps t vertical, et on a représenté chaque information mémorisée dans la position verticale correspondant au moment de la mémorisation et la position horizontale correspondant à la mémoire concernée. L'information mémorisée reste ensuite dans la mémoire concernée. Les étapes décrites ici en relation avec la figure 3 peuvent être successives, ou certaines des étapes peuvent être inversées.

A une étape 310 (RECEIVE AS1ᵢ-P), au cours de la session de communication 240 (figure 2), l'unité de sécurité 130 reçoit la clé publique AS1ᵢ-P envoyée par le domaine de sécurité 140 concerné. L'unité de sécurité 130 stocke la clé publique AS1ᵢ-P dans la mémoire 135.

A une étape 320 (GENERATE AS2ᵢ-P & AS1ᵢ-S), l'unité de sécurité 130 génère une paire de clés asymétriques AS2ᵢ. La paire AS2ᵢ comprend une clé publique AS2ᵢ-P et une clé privée AS2ᵢ-S. La clé publique AS2ᵢ-P est stockée dans la mémoire 135 de l'unité de sécurité 130. L'unité de sécurité 130 peut transmettre la clé publique AS2ᵢ-P au domaine de sécurité concerné. L'étape 310 de réception de la clé publique AS1ᵢ-P peut avoir lieu avant, pendant ou après l'étape 320 de génération et de stockage de la paire de clés asymétrique AS2ᵢ. En particulier l'étape 320 peut avoir lieu avant la session de communication 240 (figure 2).

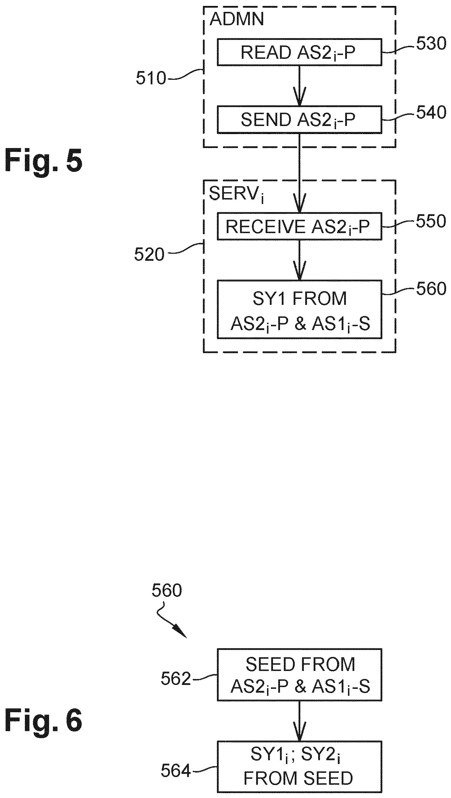

Après l'étape 320, la clé publique AS2ᵢ-P reste stockée dans la mémoire 135. En particulier, la clé publique AS2ᵢ-P reste stockée après la fin de la session de communication 240, et reste dans la mémoire au cours d'éventuelles autres sessions de communication avec le domaine de sécurité concerné ou avec un autre des domaines de sécurité. Plus particulièrement la clé publique AS2ᵢ-P reste stockée dans la mémoire 135 après une éventuelle attaque visant à se procurer des données confidentielles ou après une éventuelle coupure de l'alimentation du dispositif. Cette clé AS2ᵢ-P pourra alors être utilisée d'une manière décrite ci-après en relation avec la figure 5.

A une étape 330 (SY1ᵢ FROM AS1ᵢ-P & AS2ᵢ-S), l'unité de sécurité 130 génère une clé symétrique, SY1ᵢ. La clé symétrique SY1ᵢ est générée à partir de la clé privée AS2ᵢ-S générée par l'unité de sécurité 130 et de la clé publique AS1ᵢ-P provenant du domaine de sécurité. L'unité de sécurité envoie la clé symétrique SY1ᵢ à l'unité de traitement et de stockage 120. De préférence, l'unité de traitement et de stockage 120 reçoit la clé symétrique SY1ᵢ et la stocke, préférentiellement dans la mémoire vive 123, encore plus préférentiellement dans la partie 125 de la mémoire vive 123.

De préférence, l'unité de sécurité 130 génère en outre une ou plusieurs clés symétriques SY2ᵢ à partir de la clé privée AS2ᵢ-S qu'elle a générée et de la clé publique AS1ᵢ-P provenant du domaine de sécurité. Un exemple de mise en oeuvre d'une telle étape est détaillée ci-après en relation avec la figure 4. De préférence, l'unité de traitement et de stockage 120 reçoit la ou les clés symétriques SY2ᵢ et les stocke, préférentiellement dans la mémoire vive 123, encore plus préférentiellement dans la partie 125 de la mémoire vive 123.

De préférence, à une étape 340 (ERASE AS2ᵢ-S) postérieure à l'étape 330, l'unité de sécurité 130 efface, c'est-à-dire détruit, la clé privée AS2ᵢ-S. Autrement dit, après cette étape, le dispositif ne contient plus d'information permettant de reconstituer la clé privée AS2ᵢ-S.

De préférence, l'étape 340 a lieu dès que possible après l'étape 330, et en particulier avant des étapes optionnelles successives 350 et 360, plus préférentiellement avant la fin de la session de communication 240. On limite ainsi la durée pendant laquelle la clé privée AS2ᵢ-S, qui permet de générer la ou les clés symétriques SY1ᵢ, SY2ᵢ, est présente dans le dispositif.

De préférence, après les étapes 330 et 340, au moins lorsque le domaine de sécurité 140 concerné n'est pas l'administrateur 150, les clés qui, parmi les clés symétriques SY1ᵢ, SY2ᵢ, sont stockées, sont uniquement dans la mémoire vive 123, plus préférentiellement dans la partie 125 de la mémoire vive 123. De ce fait, si une tentative d'attaque est détectée par le circuit 126, le dispositif 110 ne contient plus d'information permettant à elle seule de retrouver la ou les clés symétriques SY1ᵢ, SY2ᵢ. Ceci permet de faire échouer la tentative d'attaque.

En outre, une opération telle qu'une maintenance, par exemple pour changer des batteries du dispositif 110, ou une opération de service après-vente, est effectuée préférentiellement en déclenchant une détection par le circuit de détection 126. Par rapport à une opération de maintenance prévoyant de neutraliser la détection par le circuit 126, ceci permet d'éviter de créer une porte dérobée dans la sécurité du dispositif 110. En effet, un attaquant aurait pu utiliser une telle porte dérobée pour mener une attaque. Après cette opération, de même qu'après une tentative d'attaque, le dispositif 110 ne contient plus d'information permettant à elle seule de retrouver la ou les clés symétriques SY1ᵢ, SY2ᵢ.

De préférence, à l'étape 350 (RECEIVE DATA), le dispositif 110, plus précisément l'unité de traitement et de stockage 120, acquiert des données confidentielles du domaine de sécurité concerné. Les données confidentielles peuvent être en provenance d'un capteur du dispositif 110, d'un utilisateur du domaine de sécurité relié au dispositif 110, ou encore, par exemple, du serveur du domaine de sécurité concerné.

Selon un mode de réalisation, l'étape 350 a lieu au cours de la session de communication 240 (figure 2), et/ou au cours d'une ou plusieurs autres sessions de communication du même type que la session de communication 240, c'est-à-dire par un réseau du type du réseau 160. Plus précisément, chaque session de communication est établie entre le dispositif et le serveur du domaine de sécurité et/ou un utilisateur du domaine de sécurité. De préférence, au cours de l'étape 350, chaque communication utilise une ou plusieurs clés parmi les clés symétriques SY2ᵢ pour sécuriser la communication et ainsi échanger des données confidentielles. Ainsi, les étapes décrites ci-dessus permettent des communications sécurisées entre le dispositif 110, le serveur et/ou l'utilisateur. Les données confidentielles peuvent être traitées par le circuit 122 avant l'étape suivante 360.

Selon un autre mode de réalisation, compatible avec le précédent, les données confidentielles sont acquises par le dispositif 110, par exemple par des capteurs équipant le dispositif. Les données confidentielles peuvent aussi être entrées directement dans le dispositif, par exemple au moyen d'un clavier ou d'un stockage amovible. Les données confidentielles peuvent également être traitées par le circuit 122 avant l'étape suivante 360.

A l'étape 360 (ENCRYPT DATA WITH SY1ᵢ), le dispositif 110 stocke au moins une partie des données confidentielles. Les données confidentielles stockées sont sous forme cryptée par la clé symétrique SY1ᵢ (DATA+SY1ᵢ), c'est-à-dire cryptée avec, ou à l'aide de, la clé symétrique SY1ᵢ. Ainsi, les données confidentielles DATA du domaine de sécurité sont indéchiffrables sans connaître la clé SY1ᵢ. Les données confidentielles stockées sont situées préférentiellement dans la mémoire non volatile de type Flash 124 de l'unité de traitement et de stockage 120.

Comme mentionné ci-dessus, du fait que la ou les clés SY1ᵢ, SY2ᵢ sont stockées dans la partie 125 de la mémoire vive 123, en cas de détection d'attaque et/ou d'opération de maintenance, la ou les clés SY1ᵢ, SY2ᵢ sont effacées. Le dispositif ne stocke alors plus d'information permettant, à elle seule, d'obtenir la ou les clés SY1ᵢ, SY2ᵢ. En particulier, le dispositif ne contient pas la clé privée AS2ᵢ-S. Ainsi, si un attaquant poursuit une tentative d'attaque, il ne pourra pas obtenir, en particulier, la clé symétrique SY1ᵢ. Même s'il réussit, par exemple, à lire le contenu de la mémoire de type Flash 124, du fait que les données contenues sont cryptées par la clé symétrique SY1ᵢ, l'attaquant ne pourra pas décrypter ce contenu sans la clé SY1ᵢ. Il ne pourra donc pas obtenir les données confidentielles. Les étapes décrites ci-dessus permettent donc de protéger les données des domaines de sécurité contre des attaques.

La figure 4 représente, de manière schématique, des blocs illustrant un exemple préféré de mise en oeuvre de l'étape 330 décrite en relation avec la figure 3, et des informations mémorisés dans des mémoires au cours de cette étape. Plus précisément, les étapes et informations sont représentées en figure 4 de la même manière qu'en figure 3.

A une étape 332 (SEED FROM AS1ᵢ-P & AS2ᵢ-S), l'unité de sécurité 130 génère, à partir de la clé privée AS2ᵢ-S qu'elle a générée et de la clé publique AS1ᵢ-P qu'elle a reçue du domaine de sécurité, une graine SEEDᵢ, c'est-à-dire un nombre générateur d'une suite pseudo-aléatoire de clés. Les clés SY1ᵢ et SY2ᵢ sont alors des clés de la suite pseudo-aléatoire.

A une étape 334 (SY1ᵢ, SY2ᵢ FROM SEED) chaque clé symétrique SY1ᵢ, SY2ᵢ est obtenue à partir de la graine SEEDᵢ. De préférence, chaque clé symétrique SY1ᵢ, SY2ᵢ est générée à partir de la graine SEEDᵢ, d'un nombre entier représentatif du rang de la clé concernée dans la suite pseudo aléatoire, et d'une fonction de hachage. La fonction de hachage est alors, préférentiellement, de type algorithme de hachage sécurisé SHA (Secure Hash Algorithm), par exemple SHA-256. En variante, on peut mettre en oeuvre toute étape usuelle de génération de clés d'une suite pseudo-aléatoire à partir d'une graine.

Selon l'exemple représenté, comme à l'étape 330 décrite ci-dessus en relation avec la figure 3, la clé symétrique SY1ᵢ, et optionnellement une ou plusieurs des clés symétriques SY2ᵢ sont stockées préférentiellement dans la mémoire vive 123, encore plus préférentiellement dans la partie 125 de la mémoire vive 123. Selon un autre exemple, non représenté, le stockage des clés SY1ᵢ, SY2ᵢ est remplacé par le stockage de la graine SEEDᵢ. En l'absence d'attaque et d'opération de maintenance, les clés SY1ᵢ et SY2ᵢ peuvent être retrouvées à partir de la graine SEEDᵢ de la manière décrite ci-dessus. De préférence, la graine SEEDᵢ est stockée uniquement dans la mémoire vive. Dans encore un autre exemple, on stocke la graine SEEDᵢ et la ou les clés SY1ᵢ et SY2ᵢ, de préférence uniquement dans la mémoire vive. Comme décrit ci-dessus, du fait que le stockage est en mémoire vive, après une tentative d'attaque, le dispositif 110 ne contient plus d'information permettant, à elle seule, d'obtenir la ou les clés SY1ᵢ, SY2ᵢ, ce qui permet de faire échouer la tentative d'attaque.

La figure 5 représente, sous forme de blocs et de manière schématique, d'autres étapes d'un exemple du procédé. Ces étapes succèdent à celles de la figure 3. Plus précisément, les étapes exécutées par l'administrateur 150 (ADMIN) sont représentées dans un cadre 510, et les étapes exécutées par un domaine de sécurité 140 (SERVᵢ) sont représentées dans un cadre 520.

Les étapes de la figure 5 sont mises en oeuvre optionnellement après une détection d'attaque par le circuit 126 (figure 1) et/ou après une absence d'alimentation électrique et/ou une opération de maintenance. Comme mentionné ci-dessus, ceci a provoqué l'effacement de la ou des clés SY1ᵢ, SY2ᵢ et/ou de la graine SEEDᵢ qui étaient stockées dans la partie 125 de la mémoire vive 123. Le dispositif ne stocke donc plus d'information permettant, à elle seule, d'obtenir la ou les clés SY1ᵢ, SY2ᵢ. Ainsi, les données du domaine de sécurité 140, stockées dans la mémoire de type Flash 124, ne sont pas déchiffrables à partir du seul dispositif 110. Les étapes de la figure 5 décrites ci-après permettent au domaine de sécurité de retrouver la ou les clés SY1ᵢ, SY2ᵢ et de déchiffrer ses données.

A une étape 530 (READ AS2ᵢ-P), l'administrateur lit la clé AS2ᵢ-P stockée dans la mémoire non volatile 135 de l'unité de sécurité 130. Comme mentionné ci-dessus, l'administrateur est préférentiellement seul à pouvoir lire le contenu de la mémoire 135, par exemple en raison du fait qu'il est seul à posséder la clé privée AK1-2. L'administrateur peut aussi lire le contenu de la mémoire de type Flash 124 et acquérir les données cryptées par la clé symétrique SY1ᵢ. L'administrateur n'est alors pas en possession de la clé symétrique SY1ᵢ, et ne peut donc pas accéder aux données confidentielles du domaine de sécurité.

De préférence, l'unité de sécurité 130 a généré une signature (non représentée) préalablement au stockage de la clé AS2ᵢ-P de l'étape 320 (figure 3). La clé AS2ᵢ-P est alors stockée dans la mémoire 135 sous forme signée avec cette signature. Ceci permet à l'administrateur de vérifier que la clé publique AS2ᵢ-P est bien celle du dispositif 110. On évite ainsi le risque que la clé lue dans la mémoire ne corresponde pas à la clé AS2ᵢ-P générée par le dispositif 110, mais soit en fait une autre clé introduite dans la mémoire par un attaquant.

L'administrateur et le domaine de sécurité 140 considéré établissent une session de communication, de préférence sécurisée. Les modes de réalisation sont compatibles avec toute session usuelle de communication sécurisée, par exemple de type type à Sécurité de la Couche de Transport TLS ("Transport Layer Security").

A une étape 540 (SEND AS2ᵢ-P), au cours de la session de communication, l'administrateur 150 envoie la clé publique AS2ᵢ-P au domaine de sécurité 140 considéré. L'administrateur peut en outre envoyer au domaine de sécurité 140 les données confidentielles cryptées par la clé symétrique SY1ᵢ.

A une étape 550 (RECEIVE AS2ᵢ-P), le domaine de sécurité 140 (SERVᵢ) reçoit la clé publique AS2ᵢ-P. Le domaine de sécurité peut aussi recevoir les données confidentielles cryptées par la clé symétrique SY1ᵢ.

A une étape 560 (SY1 FROM AS2ᵢ-P & AS1ᵢ-S), le domaine de sécurité retrouve, ou recalcule, la clé SY1ᵢ à partir de la clé publique AS2ᵢ-P qu'il a reçue et de sa clé privée AS1ᵢ-S. Pour cela, les paires de clés asymétriques AS1ᵢ (paire générée à l'étape de la figure 2), et AS2ᵢ, (paire générée à l'étape 320 - figure 3) sont prévues de sorte que la ou les clés symétriques obtenues à partir de la clé privée AS2ᵢ-S et de la clé publique AS1ᵢ-P puissent être déduites à partir de la clé privée AS1ᵢ-S et de la clé publique AS2ᵢ-P. Autrement dit, la ou les clés symétriques SY1ᵢ, SY2ᵢ sont calculables à partir de la clé privée AS1ᵢ-S et de la clé publique AS2ᵢ-P. Ceci peut être obtenu par un algorithme de type Diffie-Hellman, choisi préalablement. Il résulte de cet algorithme un secret partagé par le domaine de sécurité 140 et l'unité de sécurité 130 du dispositif 110. Dans un exemple, le secret partagé est la clé symétrique SY1ᵢ, et le domaine de sécurité obtient ainsi SY1ᵢ à partir de AS2ᵢ-P et AS1ᵢ-S. Cependant, de préférence, le secret partagé est la graine SEEDᵢ et le domaine de sécurité retrouve la ou les clés symétriques SY1ᵢ, SY2ᵢ à partir de la graine SEEDᵢ dans des étapes décrites ci-après en relation avec la figure 6.

Le domaine de sécurité est alors en possession de la clé symétrique SY1ᵢ. Le domaine de sécurité peut donc, à une étape ultérieure, décrypter ses données confidentielles cryptées, par exemple les données confidentielles cryptées que l'administrateur lui a transmises.

Le domaine de sécurité est le seul à être en possession de la clé symétrique SY1ᵢ. Le domaine de sécurité est donc le seul à pouvoir décrypter ses données confidentielles. En particulier, ni l'administrateur, ni les autres domaines de sécurité, n'ont accès à ses données confidentielles. Ainsi, le procédé décrit ci-dessus permet, par l'effacement des clés, de protéger les données confidentielles contre une tentative d'attaque et permet ensuite à chaque domaine de sécurité de retrouver ses données confidentielles après la tentative d'attaque, sans que ces données puissent être connues par les autres domaines de sécurité et/ou l'administrateur.

La figure 6 représente, sous forme de blocs, des étapes d'un exemple préféré de mise en oeuvre de l'étape 560. Un algorithme de type Diffie-Hellman est utilisé à partir des clés asymétriques AS1ᵢ et AS2i et fournit, comme secret partagé, la graine SEEDᵢ décrite ci-dessus en relation avec la figure 4.

A une étape 562 (SEED FROM AS2ᵢ-P & AS1ᵢ-S), le domaine de sécurité retrouve le secret partagé, à savoir ici la graine SEEDᵢ, à partir de la clé publique AS2ᵢ-P et de la clé privée AS1ᵢ-S.

A une étape 564, le domaine de sécurité retrouve la ou les clés symétriques SY1ᵢ, SY2ᵢ à partir de la graine SEEDᵢ avec le même algorithme, défini au préalable, que celui utilisé par l'unité de sécurité 130 à l'étape 334 (figure 4).

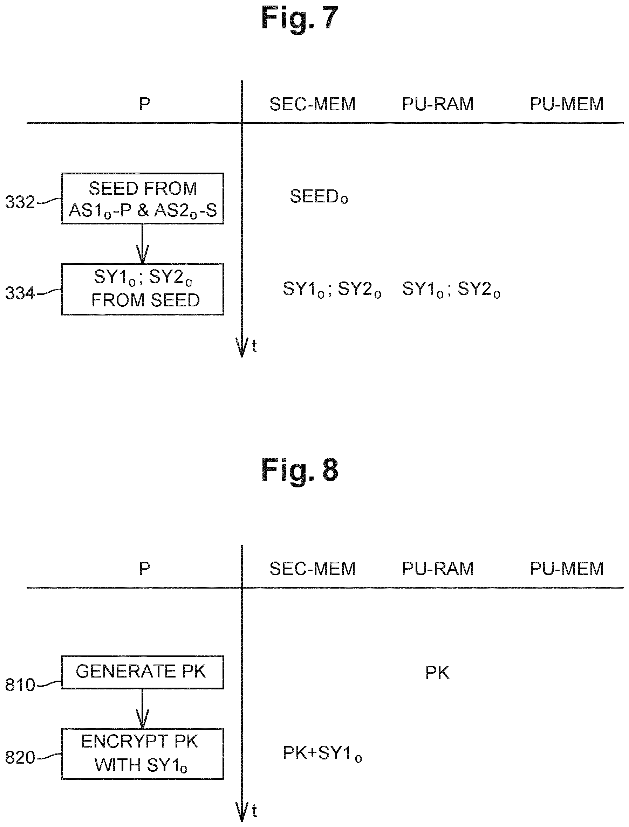

La figure 7 représente, de manière schématique, des blocs illustrant d'autres étapes d'un exemple préféré du procédé, et des informations mémorisées dans des mémoires au cours de ces étapes. Plus précisément, les étapes et informations mémorisées sont représentées de la même manière qu'en figure 3.

Les étapes de la figure 7 correspondent à l'étape 330 de la figure 3 dans le cas préféré où l'administrateur est aussi le domaine de sécurité concerné (repéré par l'indice i=0). Plus particulièrement, l'exemple illustré correspond à la mise en oeuvre de l'étape 330 selon les étapes de la figure 4, à savoir comprenant l'étape 332 (SEED FROM AS1₀-P & AS2₀-S) de génération de la graine SEED₀, et l'étape 334 (SY1₀, SY2₀ FROM SEED) de génération de la ou des clés symétriques SY1₀, SY2₀.

Les étapes de la figure 7 diffèrent de l'étape 330 de la figure 3 en ce que les clés symétriques SY1₀, SY2₀ sont stockées dans la mémoire 135 de l'élément de sécurité en plus d'être stockées dans la mémoire vive 123 de l'unité de traitement et de stockage 120. De préférence, dans l'exemple illustré, les étapes de la figure 7 diffèrent en outre de celles de la figure 4 en ce que la graine SEED₀ et, de préférence, la ou les clés symétriques SY1₀, SY2₀ ,sont stockées dans la mémoire 135 encryptée par une clé de l'espace de clés 134 de l'élément de sécurité. L'unité de sécurité de réutiliser la graine SEED₀ et/ou la ou les clés symétriques SY1₀, SY2₀ pour communiquer avec l'administrateur sans rendre ces clés accessibles.

La figure 8 représente, de manière schématique, des blocs illustrant d'autres étapes d'un exemple préféré du procédé, et des informations mémorisées dans des mémoires au cours de ces étapes. Plus précisément, les étapes et informations mémorisées sont représentées de la même manière qu'en figure 3. Les étapes de la figure 8 sont de préférence mises en oeuvre par le dispositif 110 avant des sessions de communication avec les domaines de sécurité 140, par exemple avant communication avec l'administrateur 150.

A une étape 810 (GENERATE PK), l'unité de sécurité génère une clé symétrique supplémentaire PK. La clé PK est transmise à l'unité de traitement et de stockage 120 et stockée dans la mémoire vive 123, de préférence dans la partie 125 de la mémoire vive 123. La clé PK est ensuite utilisée pour crypter des communications internes au dispositif, en particulier entre l'unité de sécurité 130 et l'unité de traitement et de stockage 120. On évite ainsi qu'un attaquant puisse obtenir des informations en surveillant des signaux transitant par des liaisons internes au dispositif, en particulier entre les unités 130 et 120. On évite en outre qu'un attaquant puisse mener une attaque sur la base d'un remplacement de l'unité 120 par une autre unité de traitement et de stockage.

A une étape 820 (ENCRYPT PK WITH SY1₀), l'unité de sécurité crypte la clé PK par la clé symétrique SY1₀ associée à l'administrateur 150. La clé cryptée (PK + SY1₀) est ensuite stockée dans la mémoire 135 de l'unité de sécurité 130. En variante, la clé PK est cryptée par la ou l'une des clés SY2₀.

Du fait que la clé PK est stockée dans la mémoire vive 123, cette clé est effacée si une attaque est détectée et/ou en cas de coupure de l'alimentation. Du fait que le seul exemplaire restant est stocké de manière cryptée par la clé SY1₀, et du fait que le dispositif ne contient aucune information permettant à un attaquant de connaître la clé SY1₀ sans connaître ni une éventuelle clé interne de l'élément de sécurité, ni la clé privée AS1₀-S de l'administrateur, un attaquant ne peut pas avoir connaissance de la clé PK.

Après une tentative d'attaque ou après une coupure d'alimentation, l'administrateur peut retrouver la clé SY1₀ de la manière décrite en relation avec les figures 5 et 6. L'administrateur peut alors décrypter et charger la clé PK dans la partie 125 de la mémoire vive 123. Ceci permet de remettre le dispositif en fonctionnement. De préférence, au cours de ce nouveau fonctionnement, on réitère les étapes décrites ci-dessus de génération des paires de clés AS1ᵢ et AS2ᵢ, ainsi que la ou les clés symétriques SY1ᵢ, SY2ᵢ.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en oeuvre pratique des modes de réalisation et variantes décrits est à la portée de l'homme du métier à partir des indications fonctionnelles données ci-dessus.

## Revendications

1. Procédé de cryptage mis en oeuvre par un circuit électronique (115, 130) comportant une première mémoire non volatile (135), comprenant :
- la création (320) d'une ou plusieurs premières paires de clés asymétriques (AS2ᵢ), la première paire ou chacune des premières paires comprenant des premières clés privée (AS2ᵢ-S) et publique (AS2ᵢ-P) ; et
- pour la ou au moins une des premières paires (AS2ᵢ) :
∘ la mémorisation de la première clé publique (AS2ᵢ-P) dans la première mémoire (135) ;
∘ la réception (310) d'une deuxième clé publique (AS1ᵢ-P) au cours d'une session de communication (230, 240) ; et
∘ la formation (330) d'une première clé symétrique (SY1ᵢ) à partir de la première clé privée (AS2ᵢ-S) et de la deuxième clé publique (AS1ᵢ-P),
∘ la première clé publique (AS2ᵢ-P) restant mémorisée dans la première mémoire (135) après ladite session de communication (230, 240).

2. Procédé selon la revendication 1, dans lequel la session de communication est entre le circuit électronique et un domaine de sécurité, la deuxième clé publique étant envoyée au circuit électronique par le domaine de sécurité pendant la session de communication.

3. Procédé selon la revendication 1 ou 2, dans lequel la première clé publique (AS2i-P) reste stockée dans la première mémoire (135) après une attaque visant à se procurer des données confidentielles stockées dans le circuit et/ou après une coupure de l'alimentation du circuit électronique.

4. Procédé selon l'une quelconque des revendications 1 à 3, comprenant, pour la ou au moins une des premières paires (AS2ᵢ), l'effacement (340) de la première clé privée (AS2ᵢ-S), de préférence au cours de ladite session de communication (230, 240).

5. Procédé selon l'une quelconque des revendications 1 à 4, dans lequel, pour la ou au moins une des premières paires (AS2ᵢ), au moins une deuxième clé symétrique (SY2ᵢ) est formée à partir de la première clé privée (AS2ᵢ-S) et de la deuxième clé publique (AS1ᵢ-P).

6. Procédé selon la revendication 5, comprenant, pour la ou au moins une des premières paires (AS2ᵢ), la formation (334) des première (SY1ᵢ) et deuxième (SY2ᵢ) clés symétriques à partir d'une graine (SEEDᵢ) formée à partir de la première clé privée (AS2ᵢ-S) et de la deuxième clé publique (AS1ᵢ-P).

7. Procédé selon la revendication 6, comprenant, pour une seule des premières paires (AS2₀), la mémorisation dans la première mémoire (135) de la graine (SEED₀) et de la première clé symétrique (SY1₀), de préférence cryptées par une clé interne audit circuit électronique (130).

8. Procédé selon l'une quelconque des revendications 5 à 7, comprenant la mémorisation de la ou des premières clés symétriques (SY1ᵢ) dans une autre mémoire (123), volatile et/ou configurée pour être effacée en cas de détection d'attaque.

9. Procédé selon l'une quelconque des revendications 1 à 8, comprenant, pour la ou au moins une des premières paires (AS2ᵢ), le stockage de données cryptées (DATA+SY1ᵢ) par la première clé symétrique (SY1ᵢ), lesdites données (DATA+SY1ᵢ) étant stockées dans une deuxième mémoire non volatile (124).

10. Procédé selon l'une quelconque des revendications 1 à 9, dans lequel la ou les premières clés publiques (AS2ᵢ-P) sont mémorisées sous forme signée par ledit circuit électronique (130).

11. Procédé selon l'une quelconque des revendications 1 à 10, dans lequel, pour la ou au moins une des premières paires (AS2ᵢ), la deuxième clé publique (AS1ᵢ-P) provient d'une deuxième paire de clés asymétriques (AS1ᵢ) comprenant une deuxième clé privée (AS1ᵢ-S), les première (AS2ᵢ) et deuxième (AS1ᵢ) paires de clés asymétriques étant de sorte que la première clé symétrique (SY1ᵢ) soit déductible de la deuxième clé privée (AS1ᵢ-S) et la première clé publique (AS2ᵢ-P), les première et deuxième paires étant de préférence obtenues par un algorithme de Diffie-Hellman.

12. Procédé selon l'une quelconque des revendications 1 à 10, comprenant en outre, pour au moins une des premières paires (AS2ᵢ-P) :
- la lecture (530) dans la mémoire, par un administrateur (150), de la première clé publique (AS2ᵢ-P) de ladite première paire ;
- la transmission (540, 550) de la première clé publique (AS2ᵢ-P) de ladite première paire à un détenteur (140) de la deuxième clé privée (AS1ᵢ-S) ; et
- la déduction (560) de la première clé symétrique (SY1ᵢ) à partir de la première clé publique (AS2ᵢ-P) et d'une deuxième clé privée (AS1ᵢ-S) d'une deuxième paire de clés asymétriques (AS1ᵢ) comprenant la deuxième clé publique (AS1ᵢ-P) .

13. Procédé selon l'une quelconque des revendications 1 à 12, dans lequel :
- la première mémoire (135) est lisible uniquement par un détenteur d'une clé symétrique supplémentaire (PK) et/ou un administrateur (150), de préférence détenteur d'une troisième clé privée (AK1-2) ; et/ou
- des communications internes audit circuit électronique sont cryptées par une clé symétrique supplémentaire (PK) ; et/ou
- une clé symétrique supplémentaire (PK) est stockée dans la première mémoire sous forme cryptée (PK+SY1₀) par la première clé de la ou de l'une des premières paires (SY1₀).

14. Circuit électronique (115, 130) configuré pour mettre un oeuvre un procédé selon l'une quelconque des revendications 1 à 12.

15. Système (100) comprenant un circuit (115, 130) selon la revendication 14, ledit système (100) étant de préférence configuré pour mettre en oeuvre un procédé selon la revendication 13.
